# EUROPÄISCHE PATENTANMELDUNG

(11) **EP 1 298 899 A1**
(43) Veröffentlichungstag der Anmeldung: **02.04.2003**
(21) Anmeldenummer: 01123441.6
(22) Anmeldetag: 28.09.2001
(51) Int. Cl.: H04M 3/42, H04Q 7/38

(54) **Verfahren zur Benachrichtigung über die Wiedererreichbarkeit eines während einer Gesprächsverbindung von einem anderen Teilnehmer getrennten Teilnehmers eines Mobilfunknetzes**

(71) Anmelder: SIEMENS AKTIENGESELLSCHAFT, 80333 München (DE)
(72) Erfinder: Zwach, Michael, 2340 Mödling (AT)

(57) **Zusammenfassung**

Ein Verfahren zur Benachrichtigung eines ersten Teilnehmers (TE1) eines Mobilfunknetzes (FUN) über den Wiedereintritt eines zweiten, infolge eines Verlassens des Empfangs/Sendebereiches (BER) des Mobilfunknetzes (FUN) während einer Gesprächsverbindung zwischen den beiden Teilnehmern (TE1, TE2) getrennten Teilnehmers (TE2) in den Empfangs/Sendebereich (BER) des Mobilfunknetzes (FUN), wobei das Mobilfunknetz (FUN) bei Wiedererreichbarkeit des zweiten Teilnehmers (TE2) eine Nachricht (NAR) an den ersten Teilnehmer (TE1) übermittelt.

## Beschreibung

Verfahren zur Benachrichtigung über die Wiedererreichbarkeit eines während einer Gesprächsverbindung von einem anderen Teilnehmer getrennten Teilnehmers eines Mobilfunknetzes

Die Erfindung betrifft ein Verfahren zur Benachrichtigung eines ersten Teilnehmers eines Mobilfunknetzes über den Wiedereintritt eines zweiten, infolge eines Verlassens des Sende/Empfangsbereiches des Mobilfunknetzes während einer Gesprächsverbindung zwischen den beiden Teilnehmern getrennten Teilnehmers in den Empfangs/Sendebereich des Mobilfunknetzes, wobei den beiden Teilnehmern je ein Mobilfunkgerät mit je zumindest einer Rufnummer in dem Mobilfunknetz zugeordnet ist.

Weiters betrifft die Erfindung ein Telekommunikationssystem mit einem Mobilfunknetz und zumindest zwei Mobilfunkgeräten, welchen in dem Mobilfunknetz je zumindest eine Rufnummer zugeordnet ist.

Bei Gesprächsverbindungen zwischen Teilnehmern eines Mobilfunknetzes kann es zu ungewollten Gesprächsabbrüchen kommen, die durch das Verlassen des Sende/Empfangsbereiches des Mobilfunknetzes durch einen der Gesprächspartner verursacht sind.

Derartige Situationen können beispielsweise auf Eisenbahnstrecken, bei Durchfahren eines Tunnels, oder in Gegenden mit einer geringen bzw. schlechten Netzabdeckung, wie beispielsweise im Gebirge auftreten.

Bis jetzt ist noch keine Möglichkeit bekannt, den anderen Gesprächsteilnehmer, der sich zumeist noch im Sende/Empfangsbereich des Mobilfunknetzes befindet, bei Wiedereintritt des temporär nicht senden/empfangen könnenden Teilnehmers in den Sende/Empfangsbereich des Mobilfunknetzes von dessen Erreichbarkeit automatisch zu verständigen. Bekannterweise kann der wiedererreichbare Teilnehmer nur durch einen neuerlichen Anruf seinen Gesprächspartner davon informieren, dass er wieder erreichbar ist.

Sobald der Teilnehmer, welcher das Netz verlassen hat, wieder "Empfang" hat, meldet sich dessen Mobilfunkgerät, bei bekannten GSM-Netzen, am Netz erneut an. Der neue Status wird dann in einer Home Location Registry oder kurz HLR-Rgister eingetragen.

Das HLR-Register ist eine Komponente des Switching Subsystems, in GSM-Netzen. Die HLR-Datenbank ist die zentrale Datenbank innerhalb der GSM-Architektur. In ihr werden alle Informationen über die Mobilfunkteilnehmer gespeichert, die einem bestimmten stationären Bereich zuzuordnen sind. Diese Teilnehmerdaten dienen u.a. dem Verbindungsaufbau und der Diensteführung. Je nach Netzgröße, Teilnehmerzahl und Netzorganisation können in einem GSM-Netz auch mehrere HLR-Register vorhanden sein. Ein HLR-Register kann üblicherweise mehrere 100.000 Teilnehmer verwalten, wobei die Teilnehmer-Rufnummer anzeigen kann, zu welchem GSM-Netz der Teilnehmer gehört und in welchem Home Location Register sich seine Daten befinden.

Obwohl bei GSM-Netzen ein Verlassen des Netzes und ein Wiedereintreten in den Empfangsbereich des Netzes von der Home Location Registry erkannt wird, ist es jedoch oftmals so, dass der Wiedereintritt in den Sende/Empfangsbereich des Mobilfunknetzes durch den getrennten Gesprächspartner nicht registriert wird, da das Mobilfunkgerät des Teilnehmers, der den Bereich des Mobilfunknetzes verlässt, üblicherweise von diesem Teilnehmer nicht permanent überwacht wird, um den Netzempfang zu kontrollieren.

Von Seiten des Gesprächspartners, der sich noch im Sende/Empfangsbereich des Netzes befindet, wird es zumeist nach einigen erfolglosen Versuchen aufgegeben den anderen Teilnehmer wieder zu erreichen. Es kann daher sein, dass ein Wiedereintritt in den Sende/Empfangsbereich des Netzes von beiden Gesprächsteilnehmern über einen längeren Zeitraum hinweg nicht bemerkt wird. Was große Nachteile hinsichtlich des Benutzungskomforts mit sich bringen kann.

Es ist daher eine Aufgabe der Erfindung, einen Weg zu schaffen, der es ermöglicht, auf eine einfache und kostengünstige Weise bei einem ungewollt abgebrochenen Gespräch in einem Mobilfunknetz infolge des Verlassens des Sende/Empfangsbereiches dieses Netzes durch einen Gesprächsteilnehmer bei Wiedereintritt dieses Teilnehmers in den Sende/Empfangsbereich des Netzes den anderen Teilnehmer davon zu benachrichtigen.

Diese Aufgabe wird mit einem Verfahren der eingangs genannten Art erfindungsgemäß dadurch gelöst, dass bei Verlassen des Sende/Empfangsbereiches des Mobilfunknetzes durch das Mobilfunkgerät des zweiten Teilnehmers die Rufnummer des Mobilfunkgerätes des ersten Teilnehmers von dem Mobilfunknetz gespeichert wird und bei Wiedereintritt des Mobilfunkgerätes des zweiten Teilnehmers in den Sende/Empfangsbereich des Mobilunknetzes von dem Mobilfunknetz unter Verwendung der gespeicherten Rufnummer eine Nachricht, betreffend den Wiedereintritt des Mobilfunkgerätes des zweiten Teilnehmers in das Mobilfunknetz, an das Mobilfunkgerät des ersten Teilnehmers übermittelt wird.

Es ist ein Verdienst der Erfindung, dass ein im Sende/Empfangsbereich des Netzes verbliebener Gesprächspartner sofort davon informiert werden kann, wenn der andere Gesprächspartner wieder erreichbar ist.

In einer bevorzugten Ausführungsform der Erfindung wird die Rufnummer des Mobilfunkgerätes des ersten Teilnehmers in einer Teilnehmerverwaltung des Mobilfunknetzes gespeichert.

Vorteilhafterweise ist das Mobilfunknetz ein GSM-Netz oder ein UMTS-Netz, wobei die Teilnehmerverwaltung eine Home Location Registry sein kann.

Zur Durchführung des erfindungsgemäßen Verfahrens eignet sich insbesondere ein Telekommunikationssystem der eingangs genannten Art, welches dazu eingerichtet ist, das Telekommunikationssystem dazu eingerichtet ist, bei Verlassen des Sende/Empfangsbereiches des Mobilfunknetzes durch ein zweites Mobilfunkgerät während einer Gesprächsverbindung mit einem ersten Mobilfunkgerät die Rufnummer des ersten Mobilfunkgerätes zu speichern und bei Wiedereintritt des zweiten Mobilfunkgerätes in den Sende/Empfangsbereich des Mobilfunknetzes eine Nachricht, betreffend den Wiedereintritt des zweiten Mobilfunkgerätes in das Mobilfunknetz, an das erste Mobilfunkgerät zu übermitteln.

Vorteilhafterweise ist eine Teilnehmerverwaltung für das Mobilfunknetz vorgesehen, welche dazu eingerichtet ist, die Rufnummer des ersten Mobilfunkgerätes zu speichern.

Eine besonders vorteilhafte Variante der Erfindung sieht vor, dass das Mobilfunknetz ein GSM-Netz oder UMTS-Netz ist, wobei die Teilnehmerverwaltung eine Home Location Registry sein kann.

Die Erfindung samt weiteren Vorteilen wird im folgenden anhand einiger nicht einschränkender Ausführungsbeispiele näher erläutert, welche in der Zeichnung dargestellt sind. In dieser zeigen schematisch:
Fig. 1 ein erfindungsgemäßes Telekommunikationssystem mit zwei Mobilfunkgeräten;
Fig. 2 eine Gesprächsverbindung zwischen den Mobilfunkgeräten aus Fig. 1;
Fig. 3 ein Abbruch der Gesprächsverbindung zwischen den bei den Mobilfunkgeräten aus Fig. 2 und
Fig. 4 eine Übermittlung einer Nachricht zur Verständigung der Wiedererreichbarkeit eines Gesprächspartners.

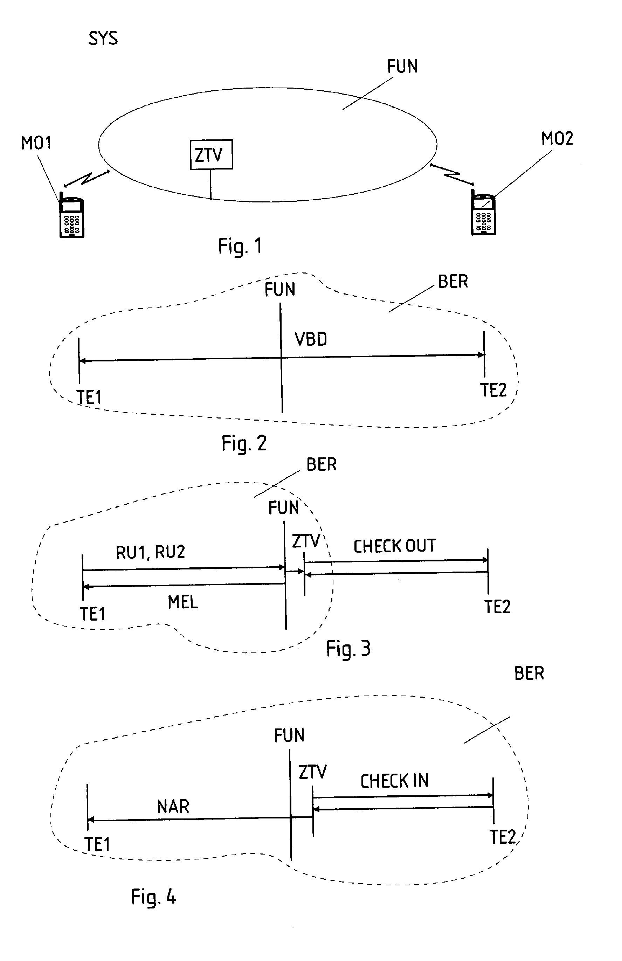

Gemäß Fig. 1 weist ein erfindungsgemäßes Telekommunikationssystem SYS ein Mobilfunknetz FUN, beispielsweise ein GSModer-UMTS-Netz, sowie zumindest zwei Mobilfunkgeräte MO1, MO2 und eine Teilnehmerverwaltung ZTV auf. Ist das Mobilfunknetz ein GSM- bzw. UMTS-Netz so kann diese Teilnehmerverwaltung ZTV als "Home Location Registry" ausgeführt sein, welche die Heimatdatei für die Teilnehmer des Mobilfunknetzes FUN darstellt.

In der als Heimatdatei bezeichneten Datenbank sind alle für jeden Mobilfunkteilnehmer signifikanten Informationen (quasi permanente, statische Daten) wie z. B. Rufnummer, MS-Identitätsnummer, Gerätart, abonnierte Basis- und Zusatz dienste, Zugangsprioritäten, Authentifikationsschlüssel gespeichert. Darüber hinaus werden auch sogenannte temporäre (dynamische) Teilnehmerdaten (z. B. momentaner Aufenthaltsort der Mobilstation notwendig sind, gespeichert. Verlässt der Teilnehmer seinen momentanen Aufenthaltsbereich, erfolgt, in der Home Location Registry eine sofortige Aktualisierung der temporär gehaltenen Daten. Meistens ist die Heimatdatei bei einer Mobilvermittlungsstelle angeordnet. Jeder mobile Teilnehmer und dessen Daten sind in genau einer Heimatdatei registriert, in der auch Gebührenerfassung und Verwaltungsaufgaben durchgeführt werden.

Befinden sich die beiden Mobilfunkgeräte MO1, MO2 innerhalb des Sende/Empfangsbereiches des Mobilfunknetzes FUN kann zwischen den beiden Mobilfunkgeräten MO1, MO2 bekannterweise eine Gesprächsverbindung VBD aufgebaut werden (Fig.2). Die Rufnummer der beiden Mobilfunkgeräte MO1, MO2 können temporär in einer an dem aktuellen Gesprächsaufbau beteiligten Vermittlungsstelle gespeichert werden.

Verlässt nun eines der beiden Mobilfunkgeräte den Sende/Empfangsbereich des Netzes, wird dies von dem Mobilfunknetz FUN registriert und ein entsprechender Eintrag in der Teilnehmerverwaltung ZTV bzw. der Home Location Registry gemacht (Fig. 3).

Bei Verbindungsabbruch infolge des Verlassens des Sende/Empfangsbereiches BER des Netzes kann die an dem Verbindungsaufbau zwischen den beiden Mobilfunkgeräten MO1, MO2 beteiligt gewesene Vermittlungsstelle von der Teilnehmerverwaltung ZTV informiert werden, dass eines der beiden Mobilfunkgeräte den Sende/Empfangsbereich BER des Netzes verlassen hat. Hierauf kann die Vermittlungsstelle die Rufnummer RU1 des in dem Netz verbliebenen Mobilfunkgerätes MO1 an die Teilnehmerverwaltung ZTV übermitteln.

Eine andere Möglichkeit besteht zum Beispiel darin, dass die Vermittlungsstelle die Rufnummern RU1, RU2 beider Telekommunikationsendgeräte nach Verbindungsabbruch an die Teilnehmerverwaltung ZTV übermittelt, welche überprüft, ob eines der beiden Mobilfunkgeräte den Sende/Empfangsbereich des Netzes verlassen hat.

In der Teilnehmerverwaltung ZTV bzw. der Home Location Registry kann dann die Rufnummer RU1 des in dem Sende/Empfangsbereich BER des Mobilfunknetzes FUN verbliebenen Mobilfunkgerätes MO1 einem dem zweiten Mobilfunkgerät zugeordnetem Speicherbereich abgelegt werden. Natürlich kann neben der Rufnummer RU1 auch ein Eintrag in dem Speicherbereich abgelegt werden, der das Ereignis angibt - den Wiedereintritt des zweiten Mobilfunkgerätes in das Netz - welches eine Zustellung der Nachricht auslöst.

Auf die soeben beschriebene Weise kann bei einem Gesprächsabbruch infolge des Verlassens des Sende/Empfangsbereiches BER durch ein Mobilfunkgerät MO2 während einer Gesprächsverbindung VBD die Rufnummer RU1 des anderen an der aktuellen Gesprächsverbindung VBD beteiligten Mobilfunkgerätes MO1 von dem Mobilfunknetz FUN beispielsweise von der Zentralen Teilnehmerverwaltung ZTV bzw. der Home Location Registry gespeichert werden.

Bei Wiedereintreten in den Sende/Empfangsbereich BER durch das zweite Mobilfunkgerät MO2 kann dieses, in beispielsweise von GSM-Netzen her bekannter Weise, von dem Netz d.h. von der Home Location Registry bzw. der zentralen Teilnehmerverwaltung ZTV registriert werden, wobei in den Speicherbereich des zweiten Mobilfunkgerätes MO2 in der Teilnehmerverwaltung ZTV ein entsprechender Eintrag vorgenommen werden kann.

Gemäß Fig. 4 ist die Teilnehmerverwaltung ZTV dazu eingerichtet, bei Registrierung des Wiedereinloggens des ersten Mobilfunkgerätes MO1 in das Mobilfunknetz eine entsprechende Nachricht NAR, betreffend die Wiedererreichbarkeit des anderen Mobilfunkgerätes MO1, beispielsweise in Form einer Sprachoder Textnachrichtnachricht, beispielsweise als SMS, an das zweite Mobilfunkgerät MO2 zu übermitteln.

Bei Wiedereintreten in den Sende/Empfangsbereich BER des Mobilfunknetzes FUN kann von der Teilnehmerverwaltung ZTV überprüft werden, ob in dem dem zweiten Mobilfunkgerät MO1 zugeordnetem Speicherbereich der Teilnehmerverwaltung ZTV eine Rufnummer eines anderen Teilnehmers gespeichert ist. Ist dies der Fall, kann die Nachricht NAR generiert werden und an das Mobilfunkgerät, dem diese Rufnummer zugeordnet ist, zugestellt werden

## Patentansprüche

1. Verfahren zur Benachrichtigung eines ersten Teilnehmers (TE1) eines Mobilfunknetzes (FUN) über den Wiedereintritt eines zweiten, infolge eines Verlassens des Sende/Empfangsbereiches (BER) des Mobilfunknetzes (FUN) während einer Gesprächsverbindung zwischen den beiden Teilnehmern (TE1, TE2) getrennten Teilnehmers (TE2) in den Empfangs/Sendebereich (BER) des Mobilfunknetzes (FUN), wobei den beiden Teilnehmern (TE1, TE2) je ein Mobilfunkgerät (MO1, MO2) mit je zumindest einer Rufnummer (RU1, RU2) in dem Mobilfunknetz (FUN) zugeordnet ist,
**dadurch gekennzeichnet, dass** bei Verlassen des Sende/Empfangsbereiches (BER) des Mobilfunknetzes (FUN) durch das Mobilfunkgerät (MO2) des zweiten Teilnehmers (TE2) die Rufnummer (RU1) des Mobilfunkgerätes (MO1) des ersten Teilnehmers (TE1) von dem Mobilfunknetz (FUN) gespeichert wird und bei Wiedereintritt des Mobilfunkgerätes (MO2) des zweiten Teilnehmers (TE2) in den Sende/Empfangsbereich des Mobilunknetzes (FUN) von dem Mobilfunknetz (FUN) unter Verwendung der gespeicherten Rufnummer (RU1) eine Nachricht (NAR), betreffend den Wiedereintritt des Mobilfunkgerätes (MO2) des zweiten Teilnehmers (TE2) in das Mobilfunknetz (FUN), an das Mobilfunkgerät (MO1) des ersten Teilnehmers (TE1) übermittelt wird.

2. Verfahren nach Anspruch 1,
**dadurch gekennzeichnet, dass** die Rufnummer (RU1) des Mobilfunkgerätes (MO1) des ersten Teilnehmers (TE1) in einer Teilnehmerverwaltung (TEV) des Mobilfunknetzes (FUN) gespeichert wird.

3. Verfahren nach Anspruch 1 oder 2,
**dadurch gekennzeichnet, dass** das Mobilfunknetz ein GSM-Netz ist.

4. Verfahren nach Anspruch 1 oder 2,
**dadurch gekennzeichnet, dass** das Mobilfunknetz ein UMTS-Netz ist.

5. Verfahren nach Anspruch 3 oder 4,
**dadurch gekennzeichnet, dass** die Teilnehmerverwaltung eine Home Location Registry ist.

6. Telekommunikationssystem (SYS) mit einem Mobilfunknetz (FUN) und zumindest zwei Mobilfunkgeräten (MO1, MO2), welchen in dem Mobilfunknetz (FUN) je zumindest eine Rufnummer (RU1, RU2) zugeordnet ist, **dadurch gekennzeichnet, dass** das Telekommunikationssystem (SYS) dazu eingerichtet ist, bei Verlassen des Sende/Empfangsbereiches (BER) des Mobilfunknetzes (FUN) durch ein zweites Mobilfunkgerät (MO2) während einer Gesprächsverbindung mit einem ersten Mobilfunkgerät (MO1) die Rufnummer (RU1, RU2) des ersten Mobilfunkgerätes (MO1 zu speichern und bei Wiedereintritt des zweiten Mobilfunkgerätes (MO2) in den Sende/Empfangsbereich (BER) des Mobilfunknetzes (FUN) eine Nachricht (NAR), betreffend den Wiedereintritt des zweiten Mobilfunkgerätes (MO2) in das Mobilfunknetz (FUN), an das erste Mobilfunkgerät (MO1) zu übermitteln.

7. Telekommunikationssystem nach Anspruch 6,
**dadurch gekennzeichnet, dass** eine Teilnehmerverwaltung (ZTV) für das Mobilfunknetz (FUN) vorgesehen ist, welche dazu eingerichtet ist, die Rufnummer (RU1) des ersten Mobilfunkgerätes (MO1) zu speichern.

8. Telekommunikationssystem nach Anspruch 6 oder 7,
**dadurch gekennzeichnet, dass** das Mobilfunknetz ein GSM-Netz ist.

9. Telekommunikationssystem nach Anspruch 6 oder 7,
**dadurch gekennzeichnet, dass** das Mobilfunknetz ein UMTS-Netz ist.

10. Telekommunikationssystem nach Anspruch 8 oder 9,
**dadurch gekennzeichnet, dass** die Teilnehmerverwaltung (ZTV) eine Home Location Registry ist.
